# EUROPÄISCHE PATENTANMELDUNG

(11) **EP 0 816 425 A1**
(43) Veröffentlichungstag der Anmeldung: **07.01.1998**
(21) Anmeldenummer: 97107997.5
(22) Anmeldetag: 16.05.1997
(51) Int. Cl.: C08L 21/02, C08J 9/30

(54) **Wässrige Kautschukdispersionen, ihre Herstellung und Verwendung zur Fertigung flammhemmend ausgerüsteter Latexschäume**

(30) Priorität: 04.07.1996 DE 19626942
(71) Anmelder: PolymerLatex GmbH & Co KG, 45764 Marl (DE)
(72) Erfinder: Sauer, Thomas, Dr., 45721 Haltern (DE); Bordeianu, Radu, Dr., 45772 Marl (DE)

(57) **Zusammenfassung**

Wäßrige, für die Herstellung von flammhemmend ausgerüsteten Latexschäumen geeignete Kautschukdispersionen, bestehend aus Synthesekautschukdispersionen (A) und weiteren Komponenten (B),
dadurch gekennzeichnet,
daß die Komponenten (B) aus Polymeren mit einem Mindestanteil von 50 Gew.-% aus Monomeren der allgemeinen Formel

R₁-C(R₂)=C(R₃)-COO-R₄ 1)

mit R₁ bis R₃ gleich Wasserstoff und/oder linearen oder verzweigten Alkylgruppen mit 1 bis 18 Kohlenstoffatomen in der Alkylkette und R₄ gleich einer linearen oder verzweigten Alkylgruppe mit 1 bis 18 Kohlenstoffatomen in der Alkylkette,
und/oder Monomeren der Struktur

R₅-OOC-C(R₆)=C(R₇)-COO-R₈ 2)

mit R₆ und R₇ gleich Wasserstoff und/oder Alkylgruppen und R₅ und R₈ gleich linearen oder verzweigten Alkylgruppen mit 1 bis 18 Kohlenstoffatomen in der Alkylkette,
und/oder Monomeren der Struktur

R₉-C(R₁₀)=C(R₁₁)-OOC-R₁₂ 3)

mit R₉ bis R₁₂ gleich Wasserstoff und/oder linearen oder verzweigten Alkylgruppen mit 1 bis 18 Kohlenstoffatomen in der Alkylkette,
bestehen und der Anteil dieser Monomere in der Kautschukdispersion 5 bis 40 Gew.-% beträgt.

## Beschreibung

Diese Erfindung betrifft neuartige, wäßrige Kautschukdispersionen sowie daraus hergestellte Latexschäume mit guten elastischen und verbesserten flammhemmenden Eigenschaften.

Latexschaum wird vielfach für hochwertige Polsterungen in Sitz- und Liegemöbeln, insbesondere in hochwertigen Matratzen eingesetzt. Weiterhin wird Latexschaum in großem Maße zur Rückenbeschichtung textiler Bodenbeläge verwendet. Dieser Schaum wird in der Regel aus wäßrigen, hochkonzentrierten Styrol-Butadien-Dispersionen, auch Synthesekautschukdispersionen genannt, aus Naturlatex oder auch aus Gemischen dieser beiden Dispersionstypen hergestellt. Diese Schäume zeichnen sich, insbesondere bei einem hohen Gehalt an Synthesehautschuk und gleichzeitig niedrigem Gehalt an Füllstoffen, durch eine hohe Entzündbarkeit sowie im Falle der Entzündung durch eine rasche Brandfortpflanzung aus. Trotz dieser unzureichenden Flammfestigkeit werden Latexschäume mit mehr oder weniger hohem Anteil an Synthesekautschuk und niedrigem Gehalt an Füllstoffen bevorzugt, da sie mit sehr guten Federungseigenschaften in konstant hoher Produktqualität und -sicherheit hergestellt werden können.

Ein Verfahren zur Bestimmung der Brandeigenschaften wird beispielsweise in der britischen Prüfvorschrift BS 5852, Teil 1, 1979 (Zigarettentest) angegeben.

Es besteht daher, insbesondere im Hinblick auf die weite Verbreitung dieser Produkte sowie bereits in einigen Ländern bestehende gesetzliche Vorschriften, großer Bedarf für hochqualitativen, flammhemmend ausgerüsteten Latexschaum, der sich unter Einwirkung einer glimmenden Zigarette weder selbst entzündet, verkohlt noch ein selbsttätiges Fortschreiten des Glimmens um die Brandzone herum aufweist. Zur Fertigung solcher Latexschäume besteht daher Bedarf für Synthesekautschukdispersionen, die eben diese Eigenschaftskombination zu vermitteln vermögen.

Bereits früher wurden eine Reihe von Verfahren zur flammhemmenden Ausrüstung von Latexschäumen entwickelt. Neben dem Einsatz handelsüblicher halogenierter, insbesondere bromierter Flammschutzmittel werden vor allem Dispersionen mit einem hohen Anteil an halogenierten Monomeren (GB 1 156 298) oder phosphororganischen Flammschutzmitteln (DE 33 16 151) beschrieben. Weiterhin wird zur Herstellung von flammhemmendem Latexschaum der Zusatz von expandierbarem Graphit (EP 0 245 779) oder mineralischen Füllstoffen wie Antimontrioxid oder Aluminiumoxid-trihydrat (DE 25 33 180) empfohlen. Diese Additive werden, einzeln oder im Gemisch, nach dem Stand der Technik in Gehalten von 25 bis zu mehreren 100 Gew.-% bezogen auf das Gesamtgewicht der Kautschuktrockensubstanz eingesetzt, um die beabsichtigte Wirkung zu erzielen.

Den so hergestellten Latexschäumen ist jedoch gemeinsam, daß ihre Eigenschaften das hochqualitative Niveau der unmodifizierten Schäume, die diese Zusätze nicht enthalten, nicht erreichen. Insbesondere müssen erhebliche Einbussen in den elastischen Eigenschaften hingenommen werden, vor allem bei Verwendung großer Mengen mineralischer Zusatzstoffe. Weiterhin erwachsen gegenüber solchen Zusätzen, insbesondere gegenüber halogenhaltigen Flammschutzmitteln, immer größere Bedenken hinsichtlich Ökologie und späterer Entsorgung der Fertigprodukte. Es besteht daher großer Bedarf für vergleichbare Produkte, die keine halogenierten Zusätze und möglichst wenig anorganische Füllstoffe enthalten, dabei aber gleichzeitig eine ausreichende flammhemmende Wirkung und ein gutes Eigenschaftsniveau aufweisen.

Aufgabe der vorliegenden Erfindung ist es daher, modifizierte Kautschukdispersionen und dafür geeignete Herstellungsverfahren zur Verfügung zu stellen, aus denen hochqualitative Latexschäume mit deutlich verminderter Entzündbarkeit und Brandfortpflanzung gemäß BS 5852 gefertigt werden können, die die erwähnten Nachteile des Standes der Technik nicht aufweisen.

Die Aufgabe wurde gemäß den Patentansprüchen gelöst.

Es wurde nun überraschenderweise gefunden, daß die Aufgabe dadurch gelöst wird, daß den an sich bekannten, wäßrigen Kautschukdispersionen (A), die zur Schaumherstellung geeignet sind, zusätzliche Komponenten (B) auf der Basis von Monomereinheiten der allgemeinen Formel

R₁-C(R₂)=C(R₃)-COO-R₄ (1)

zugegeben werden. Dabei bedeuten R₁ bis R₃ Wasserstoff und/oder lineare bzw. verzweigtkettige Alkylgruppen mit 1 bis 18 Kohlenstoffatomen in der Alkylkette. R₄ ist eine lineare oder verzweigtkettige Alkylgruppe mit 1 bis 18 Kohlenstoffatomen in der Alkylkette. Bevorzugt sind R₁ und R₂ Wasserstoff, R₃ Wasserstoff oder Methyl und R₄ eine Alkylgruppe mit 1 bis 8 Kohlenstoffatomen in der Alkylkette, d.h. Alkylester der (Meth-)Acrylsäure. Besonders bevorzugt sind Methylmethacrylat und Butylacrylat.

Wahlweise und in Abwandlung der Formel (1) können die Komponenten (B) auch aus Monomerbausteinen der allgemeinen Formel

R₅-OOC-C(R₆)=C(R₇)-COO-R₈ (2)

aufgebaut sein. Dabei bedeuten R₆ und R₇ Wasserstoff und/oder Alkylgruppen und R₅ und R₈ lineare oder verzweigtkettige Alkylgruppen mit 1 bis 18 Kohlenstoffatomen in der Alkylkette. Bevorzugt ist R₅ = R₈, und beide sind lineare oder verzweigtkettige Alkylgruppen mit 1 bis 8 Kohlenstoffatomen in der Alkylkette. In diesem Fall handelt es sich um Alkylester der Maleinsäure, der Fumarsäure oder verwandter und homologer zweibasiger, olefinisch ungesättigter Carbonsäuren.

Wahlweise und in Abwandlung der Formeln (1) und (2) können die Komponenten (B) auch aus Monomereinheiten der allgemeinen Formel

R₉-C(R₁₀)=C(R₁₁)-OOC-R₁₂ (3)

bestehen. Dabei bedeuten R₉ bis R₁₂ Wasserstoff und/oder lineare oder verzweigtkettige Alkylgruppen mit 1 bis 18 Kohlenstoffatomen in der Alkylkette. R₉ bis R₁₁ sind bevorzugt Wasserstoff und R₁₂ ist bevorzugt eine lineare oder verzweigte Alkylgruppe mit 1 bis 12 Kohlenstoffatomen in der Alkylkette. Mithin sind die bevorzugten Monomerbausteine gemäß Formel (3) Vinylester von linearen oder verzweigten, aliphatischen Carbonsäuren.

In einer erfindungsgemäßen Ausführungsform werden die Komponenten (B) enthaltend die Monomerbausteine gemäß Formeln (1) bis (3) in Form separat hergestellter, wäßriger Kunststoffdispersionen eingesetzt. Diese werden den Kautschukdispersionen (A) zugemischt, um die erfindungsgemäßen, modifizierten Kautschukdispersionen zu erhalten, aus denen die erfindungsgemäßen, flammhemmend wirkenden Latexschäume hergestellt werden.

Die Kunststoffdispersionen enthaltend Komponenten (B) können aus einem oder mehreren Monomerbausteinen der allgemeinen Formeln (1) bis (3) aufgebaut sein. Sie können ferner weitere Monomerbestandteile wie vinylaromatische Verbindungen, olefinisch ungesättigte Diene und/oder andere gebräuchliche, olefinisch ungesättigte Verbindungen enthalten, wobei jedoch der Anteil an Monomeren der allgemeinen Formeln (1) bis (3) bevorzugt größer als 50 Gew.-% bezogen auf die Gesamttrockensubstanz der Kunststoffdispersionen enthaltend die Komponenten (B) beträgt. Diese Dispersionen können nach üblichen, dem Fachmann bekannten Verfahren der Emulsionspolymerisation hergestellt werden.

Es können Dispersionen mit homogen aufgebauten Polymerpartikeln, oder aber auch - bei Verwendung mehrerer verschiedener Monomerbausteine - solche mit heterogener Morphologie, d.h. Partikel mit Bereichen unterschiedlicher Monomerzusammensetzung, verwendet werden. Insbesondere und in einer bevorzugten Ausführungsform können die Kunststoffdispersionen enthaltend die Komponenten (B) auch gleichzeitig als verstärkend wirkende Komponente (Verstärkerlatex) eingesetzt werden. Eine besonders bevorzugte Ausführungsform dieser Erfindung besteht darin, daß ein Verstärkerlatex enthaltend Komponenten (B) in Anlehnung an EP-Patentanmeldung 96 10 7758.3 eingesetzt wird. Die Monomerbausteine gemäß Formeln (1) bis (3) werden dabei zusätzlich und/oder im Austausch gegen eines oder mehrere der in dieser Lehre verwendeten Monomere eingesetzt.

Einschränkungen bezüglich der Einsatzfähigkeit bekannter Dispersionen enthaltend die Komponenten (B) bestehen nur insoweit, daß durch Abmischen mit der Kautschukkomponente (A) eine modifizierte Kautschukdispersion entsteht, die alle Anforderungen für die Herstellung von Latexschaum erfüllt. Beim Abmischen ist daher sicherzustellen, daß die beiden Dispersionen sich einheitlich vermischen und daß bei diesem Prozeß die kolloidale Stabilität beider Dispersionen erhalten bleibt. Die Dispersionen enthaltend die Komponenten (B) dürfen keinerlei negative Einflüsse auf die Verschäumung, Gelierung und Vulkanisation der so modifizierten Kautschukdispersionen ausüben. Insbesondere kommt daher dem Emulgatorsystem sowie der pH-Wert-Einstellung der Dispersion enthaltend die Komponenten (B) Bedeutung zu, da dadurch die Verträglichkeit und die Verarbeitbarkeit der Mischung bestimmt werden. Durch einfache Mischungsversuche kann im Einzelfalle ermittelt werden, welche Dispersionstypen für die erfindungsgemäße Abmischung geeignet sind. In der Regel sind Dispersionen enthaltend die Komponenten (B) vorzuziehen, die einen ähnlichen Emulgator und einen vergleichbaren pH-Wert wie die Kautschukdispersion (A) aufweisen.

Werden als Kautschukkomponente (A) synthetische Kautschukdispersionen eingesetzt, so können die Dispersionen enthaltend die Komponenten (B) bereits im Herstellungsprozeß zugemischt werden. Da als geeignete Kautschukdispersionen (A) für die Herstellung von Latexschaum bevorzugt hochkonzentrierte, wäßrige Styrol-Butadien-Dispersionen eingesetzt werden, die wiederum durch Agglomeration und Aufkonzentration entsprechend feinteiliger, niedrigkonzentrierter Styrol-Butadien-Dispersionen erhalten werden, empfiehlt sich der Zusatz der Dispersionen enthaltend die Komponenten (B) direkt nach der Agglomeration der Dispersionen (A). Geeignete Synthesekautschukdispersionen (A), die gemäß dieser Erfindung als Mischungskomponente verwendet werden können, und Verfahren zu deren Agglomeration werden beispielsweise in den Patentschriften DE 26 45 082 und DE 12 13 984 beschrieben. Die so als Gemisch erhaltene, modifizierte Kautschukdispersion kann anschließend in gewohnter Weise auf den gewünschten Feststoffgehalt aufkonzentriert werden.

Wahlweise kann als Kautschukkomponente (A) auch Naturlatex eingesetzt werden, vorzugsweise auch im Gemisch mit Synthesekautschukdispersionen.

In einer weiteren erfindungsgemäßen Ausführungsform werden die Komponenten (B) gemäß den Formeln (1) bis (3) in Form von gelösten Polymeren den Kautschukdispersionen (A) zugesetzt. Die gelösten Polymere enthaltend die Komponenten (B) werden dazu aus einem oder mehreren Monomeren der allgemeinen Formeln (1) bis (3) durch Polymerisation in Lösung hergestellt. Geeignete Verfahren dazu sind dem Fachmann geläufig. Als Lösemittel eignet sich vor allem Wasser sowie organische Lösemittel, die über einen weiten Bereich mit Wasser mischbar sind. Die Polymere enthaltend die Komponenten (B) werden - wie bereits beschrieben - mit den Kautschukdispersionen (A) vermischt. Dabei gelten die gleichen Einschränkungen wie für den Fall, daß die Komponenten (B) in Form wäßriger Dispersionen zum Einsatz gelangen.

Die gelösten Polymere enthaltend Komponenten (B) können aus einem oder mehreren Monomerbausteinen der allgemeinen Formeln (1) bis (3) aufgebaut sein. Sie können ferner weitere Monomerbestandteile wie vinylaromatische Verbindungen, olefinisch ungesättigte Diene und/oder andere gebräuchliche, olefinisch ungesättigte Verbindungen enthalten, wobei jedoch der Anteil an Monomeren der allgemeinen Formeln (1) bis (3) bevorzugt größer als 50 Gew.-% bezogen auf die Gesamttrockensubstanz der Lösungen enthaltend die Komponenten (B) beträgt.

Da organische Lösemittel für die Anwendung der modifizierten Kautschukdispersionen zur Herstellung von Latexschaum unerwünscht sind, müssen diese soweit wie möglich entfernt werden. Dies kann in einem Arbeitsgang mit dem Aufkonzentrieren der Mischung auf den gewünschten Feststoffgehalt geschehen. Da dies aber in der Regel aufwendig ist und trotzdem Restmengen verbleiben, ist bevorzugt anzustreben, die Polymere enthaltend die Komponenten (B) in Form wäßriger Lösungen und Dispersionen bereitzustellen.

Die nach den beschriebenen Verfahren hergestellten, modifizierten Kautschukdispersionen werden durch mechanisches Verschäumen mit Luft unter Zusatz der üblichen Verarbeitungs-, Vulkanisations- und Geliermittel zu Schäumen verarbeitet und anschließend durch Zuführung von Energie in der Wärme geliert und vulkanisiert.

Um einen ausreichenden flammhemmenden Effekt bei den so hergestellten Latexschäumen zu erzielen, werden die Komponenten (B) in solchen Mengen eingesetzt, daß die Monomerbausteine gemäß den allgemeinen Formeln (1) bis (3) in einen Anteil von 5 bis 40 Gew.-% an der Gesamttrockenmasse der modifizierten Kautschukdispersion eingesetzt. Bevorzugt wird das Mischungsverhältnis so gewählt, daß 10 bis 30 Gew.-% dieser Monomere enthalten sind. Daneben können dem Latexschaum beim Verschäumen flammhemmend wirkende Mineralstoffe, insbesondere Aluminiumhydroxid, zugesetzt werden, bevorzugt in einer Menge von kleiner 25 Gew.-% bezogen auf die Gesamttrockenmasse der modifizierten Kautschukdispersion. Durch Anwesenheit der Komponenten (B) bestehend aus Bestandteilen der allgemeinen Formeln (1) bis (3) kann der Gehalt von flammhemmend wirkenden Mineralstoffen, soweit überhaupt benötigt, deutlich unterhalb dem Niveau, wie es vom Stand der Technik beschrieben wird, gewählt werden. Trotzdem zeigen die resultierenden Latexschäume im Vergleich zu Standardprodukten beim Zigarettentest eine deutlich verminderte Brandfortpflanzung und verlöschen nach Entfernen der Zündquelle vollständig. Gleichzeitig haben die erfindungsgemäßen Latexschäume ein vergleichbar hochqualitatives Eigenschaftsniveau wie nicht flammhemmend ausgerüstete Standardprodukte.

Die erfindungsgemäßen Kautschukdispersionen können nach allen gängigen Verfahren wie beispielsweise Dunlop-, Talalay-, Ammonacetat- und 'Non-Gel'-Verfahren verarbeitet werden. Insbesondere können Schäume in geschlossenen oder offenen Formen, als endloser Streichschaum in allen gängigen Dimensionen und als Beschichtung textiler Träger gefertigt werden. Die so gefertigten Artikel bieten durch ihr verbessertes Brandverhalten eine erhöhte Sicherheit während der Nutzung. Sie können nach beendeter Nutzung problemlos mittels gängiger Methoden entsorgt werden. Insbesondere können die erfindungsgemäßen Latexschäume einfach und ohne schädliche Nebenprodukte in gängigen Anlagen thermisch verwertet werden, wobei die vollständige Verbrennung nicht nachteilig verzögert oder begrenzt wird und keine größeren Mengen von Verbrennungsrückständen anfallen.

Die Erfindung wird durch die folgenden Beispiele weiter erläutert. Die angegebenen Teile beziehen sich jeweils auf das Gewicht.

### Vergleichsbeispiele A bis D:

### Herstellung vorn verstärkten Kautschukdispersionen gemäß dem Stand der Technik sowie daraus gefertigten Schaumformteilen

Gemäß der Lehre von EP 0 187 905, Beispiel 1, wird ein Pfropfcopolymer-Verstärkerlatex mit einer Bruttozusammensetzung von 80 Teilen Styrol und 20 Teilen Butadien bei einer Polymerisationstemperatur von 80 °C hergestellt Nach Beendigung der Polymerisation wird ein Latex mit einem Feststoffgehalt von rund 50 Gew.-% und einem mittleren Partikeldurchmesser von 155 nm erhalten.

Die Herstellung einer Synthesekautschukdispersion (A) mit ca. 25 Gew.-% Styrol und 75 Gew.-% 1,3-Butadien erfolgt in Anlehnung an DE 26 45 082, Beispiel 1. Diese Dispersion wird anschließend nach dem Verfahren gemäß DE 12 13 984 agglomeriert und von Restmonomeren befreit. 81 Teile dieser Dispersion werden mit 19 Teilen der obigen Verstärkerdispersion (jeweils bezogen auf den Feststoffgehalt der jeweiligen Dispersion) vermischt und anschließend aufkonzentriert. Man erhält eine verstärkte Kautschukdispersion mit einem Feststoffgehalt von 68,5 Gew.-% und einer Brookfield-Viskosität von 1700 mPas.

Zu dieser Kautschukdispersion werden die in Tabelle 1 angegebenen Mengen Naturlatex (Typ LA-TZ) sowie, jeweils bezogen auf 100 Teile Kautschuktrockensubstanz, 0,75 Teile Kaliumoleat (als 17,5 %ige wäßrige Lösung) und 0,25 Teile Carboxymethylcellulose (als 2,5 %ige wäßrige Lösung), die in Tabelle 1 angegebenen Mengen Aluminiumhydroxid sowie ein Vulkanisationssystem bestehend aus
2 Teile Schwefel
1 Teil Zinkdiethyldithiocarbamat
1 Teil Zink-2-mercaptobenzthiazol
1 Teil Diphenylguanidin
3 Teile Zinkoxid
1 Teil Antioxidans
als 50 %ige wäßrige Dispersion zugegeben. Diese vulkanisierbare Masse wird in einem Schaummischer mit Luft zu einem Naßschaum verschäumt, mit 2 Teilen Natriumsilikofluorid (als 25 %ige wäßrige Dispersion) versetzt und in eine Form gegossen Die Gelierung und Vulkanisation wird im Dampf bei 100 °C innerhalb 30 Minuten durchgeführt. Der erhaltene Latexschaum wird anschließend gewaschen und 16 Stunden bei 75 °C getrocknet.

An den so erhaltenen Latexschaummustern wird ein Zigarettentest gemäß BS 5852, Teil 1, 1979 durchgeführt. Die Geschwindigkeit der Brandfortpflanzung bei aufliegender, brennender Zigarette wird jeweils relativ zum Vergleichsbeispiel B mit langsamer (-), schneller (+) oder gleich schnell (o) beurteilt. Ein Schaummuster gilt als selbstverlöschend (+), wenn nach Abbrennen der gesamten Zigarette der an der Kontaktstelle zum Schaum gebildete Brandherd selbsttätig verlöscht.

**Tabelle 1**

| **Vergleichsbeispiel** | **A** | **B** | **C** | **D** |
|---|---|---|---|---|
| Schaumlatex | 100 | 100 | 100 | 80 |
| Naturlatex | 0 | 0 | 0 | 20 |
| Aluminiumhydroxid | 0 | 15 | 40 | 0 |
| Brandfortpflanzung | + | o | - | - |
| selbstverlöschend | - | - | + | - |

### Beispiele 1 bis 3:

### Herstellung von erfindungsgemäßen Kautschukdispersionen sowie daraus gefertigen Schaumformteilen

Gemäß Beispiel 1 der DE-OS 195 25 736 wird eine Verstärkerdispersion hergestellt, bei der die angegebenen Mengen an Styrol durch Methylmethacrylat sowie Kaliumoleat durch den Emulgator Marlon PS 30 ersetzt werden. Man erhält somit als Komponente (B) eine Kunststoffdispersion mit heterogen aufgebauten Partikeln bestehend aus ca. 78 Gew.-% Methylmethacrylat (Monomerbaustein gemäß Formel (1)) und ca. 22 Gew.-% 1,3-Butadien mit einem Feststoffgehalt von ca. 50 Gew.-% und einer mittleren Partikelgröße von ca. 160 nm.

81 Teile der Synthesekautschukdispersion (A) werden mit 19 Teilen dieser Verstärkerdispersion (bezogen auf den Feststoffgehalt der jeweiligen Dispersion) vermischt und anschließend aufkonzentriert. Man erhält eine verstärkte Kautschukdispersion mit einem Feststoffgehalt von 67,2 Gew.-% und einer Brookfield-Viskosität von 1800 mPas.

Diese Kautschukdispersion wird mit den in Tabelle 2 angegebenen Mengen Naturlatex (Typ LA-TZ) und Aluminiumhydroxid sowie der weiteren Hilfsstoffe gemäß den Vergleichsbeispielen A bis D zu Schaumformteilen mit gleicher Härte und Dichte verarbeitet. Die Schäume werden anschließend dem Zigarettentest unterzogen.

**Tabelle 2**

| **Beispiel** | **1** | **2** | **3** |
|---|---|---|---|
| Synthesekautschukdispersion (A) | 81 | 73 | 65 |
| Komponente (B) | 19 | 17 | 15 |
| Naturlatex | 0 | 10 | 20 |
| Aluminiumhydroxid | 15 | 5 | 0 |
| Brandfortpflanzung | - | - | - |
| selbstverlöschend | + | + | + |

### Beispiele 4 bis 5:

### Herstellung von erfindungsgemäßen Kautschukdispersionen sowie daraus gefertigten Schaumformteilen

Als Komponente (B) wird eine handelsübliche Acrylatdispersion (PLEX 4913 D, Röhm GmbH) eingesetzt. Diese Dispersion besteht vorwiegend aus Polymethylmethacrylat, hat einen Feststoffgehalt von rund 50 Gew.-% und eine mittlere Partikelgröße von ca. 350 nm.

Die Synthesekautschukdispersion (A) wird mit den in Tabelle 3 angegeben Mengen dieser Acrylatdispersion und Aluminiumhydroxid sowie der weiteren Hilfsstoffe gemäß den Vergleichsbeispielen 1 bis 4 zu Schaumformteilen mit gleicher Härte und Dichte verarbeitet. Die Schäume werden anschließend dem Zigarettentest unterzogen.

**Tabelle 3**

| **Beispiel** | **4** | **5** |
|---|---|---|
| Synthesekautschukdispersion (A) | 85 | 65 |
| Komponente (B) | 15 | 35 |
| Aluminiumhydroxid | 15 | 5 |
| Brandfortpflanzung | - | - |
| selbstverlöschend | + | + |

Die Beispiele zeigen, daß es unter Einsatz der erfindungsgemäßen Komponenten (B) gelingt, flammhemmende Schäume gleicher Qualität herzustellen, die deutlich weniger bzw. keinen mineralischen, ebenfalls flammhemmend wirkenden Füllstoff enthalten.

## Patentansprüche

1. Wäßrige, für die Herstellung von flammhemmend ausgerüsteten Latexschäumen geeignete Kautschukdispersionen, bestehend aus Synthesekautschukdispersionen (A) und weiteren Komponenten (B),
dadurch gekennnzeichnet,
daß die Komponenten (B) aus Polymeren mit einem Mindestanteil von 50 Gew.-% aus Monomeren der allgemeinen Formel
R₁-C(R₂)=C(R₃)-COO-R₄ 1)
mit R₁ bis R₃ gleich Wasserstoff und/oder linearen oder verzweigten Alkylgruppen mit 1 bis 18 Kohlenstoffatomen in der Alkylkette und R₄ gleich einer linearen oder verzweigten Alkylgruppe mit 1 bis 18 Kohlenstoffatomen in der Alkylkette,
und/oder Monomeren der Struktur
R₅-OOC-C(R₆)=C(R₇)-COO-R₈ 2)
mit R₆ und R₇ gleich Wasserstoff und/oder Alkylgruppen und R₅ und R₈ gleich linearen oder verzweigten Alkylgruppen mit 1 bis 18 Kohlenstoffatomen in der Alkylkette,
und/oder Monomeren der Struktur
R₉-C(R₁₀)=C(R₁₁)-OOC-R₁₂ 3)
mit R₉ bis R₁₂ gleich Wasserstoff und/oder linearen oder verzweigten Alkylgruppen mit 1 bis 18 Kohlenstoffatomen in der Alkylkette,
bestehen und der Anteil dieser Monomeren in der Kautschukdispersion 5 bis 40 Gew.-% beträgt.

2. Verfahren zur Herstellung von wäßrigen Kautschukdispersionen gemäß Anspruch 1,
dadurch gekennzeichnet,
daß die Komponenten (B) in Form von Kunststoffdispersionen separat hergestellt und den Synthesekautschukdispersionen (A) zugemischt werden.

3. Verwendung der wäßrigen Kautschukdispersionen nach Anspruch 1 zur Herstellung von vulkanisierten Latexschäumen und Schaumformteilen mit erhöhter flammhemmender Wirkung.
